(19) Europäisches Patentamt
European Patent Office
Office européen des brevets

(11) Publication number: **0 049 479**
**B1**

(12) # EUROPEAN PATENT SPECIFICATION

(45) Date of publication of patent specification: **16.05.84**

(51) Int. Cl.$^3$: **C 09 D 3/727**, C 08 L 51/08, C 08 F 283/14

(21) Application number: **81107794.0**

(22) Date of filing: **30.09.81**

(54) **Vinyl type polymer composition and its use.**

(30) Priority: **03.10.80 JP 139085/80**

(43) Date of publication of application:
**14.04.82 Bulletin 82/15**

(45) Publication of the grant of the patent:
**16.05.84 Bulletin 84/20**

(84) Designated Contracting States:
**BE DE FR GB IT**

(56) References cited:
**PATENTS ABSTRACTS OF JAPAN, vol. 5, no. 94, June 19, 1981 page 110 C 59**

(73) Proprietor: **KANEGAFUCHI KAGAKU KOGYO KABUSHIKI KAISHA**
**2-4 Nakanoshima 3-chome**
**Kita-ku Osaka-shi (JP)**

(72) Inventor: **Wakabayashi, Hiroshi**
**8, 2-chome, Maikodai Tarumi-ku**
**Kobe-shi Hyogo-ken (JP)**

(74) Representative: **Vossius Vossius Tauchner Heunemann Rauh**
**Siebertstrasse 4 P.O. Box 86 07 67**
**D-8000 München 86 (DE)**

EP 0 049 479 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a composition comprising a vinyl type polymer obtained by polymerizing a vinyl monomer or monomers in the presence of a neutralized, water-soluble product of an adduct of an amorphous polymer obtained by ring-opening polymerization of dicyclopentadiene with maleic acid or maleic anhydride and an oxidation-curable type water-soluble resin.

As is well known, aqueous coating materials are noted as one type of environmental pollution free or resource-saving coating material. Synthetic resin emulsions are in wide use as resins for such aqueous coating materials. However, vinyl acetate type or acrylic emulsions which are typical of the synthetic resin emulsions possess the defect that, though they show excellent drying properties, they undergo deterioration of water resistance of the coating film after coating and drying due to the use of an emulsifier or protective colloid upon polymerization. In addition, they are liable to form a porous coating film because of the film-forming mechanism, and the resulting film does not have enough luster and adhesiveness.

The inventors have previously made an invention relating to a vinyl type polymer emulsion obtained by the emulsion polymerization of a vinyl monomer or monomers in the presence of a neutralized, water-soluble product of an adduct of an amorphous polymer obtained by ring-opening polymerization of dicyclopentadiene and having chain-like and cyclic carbon-to-carbon unsaturated double bonds within the monomer unit (hereinafter referred to as DCPD polymer) with maleic acid or maleic anhydride (malenized DCPD polymer). This is disclosed in Japanese (laid open) Patent Publication No. 38302/81. This vinyl time polymer emulsion undergoes rapid oxidation curing and is excellent in water resistance and solvent resistance. However, it does not show satisfactory corrosion resistance and coating film luster due to its property of forming porous surface which is characteristic of a water-dispersible resin.

A possible alternative for removing such defects of the water-dispersible resin may be mixing of the polymer emulsion with a water-soluble resin showing good luster, good adhesiveness and good pigment-dispersing properties. However, a large amount of water-soluble resin is necessary for removing the defects of the polymer emulsion, which always results in insufficient drying properties and insufficient solvent resistance of the coating film, though the polymer emulsion itself provides good drying properties and good solvent resistance.

As a result of intensive investigations to remove the general defects attributable to the water-dispersible resin while maintaining the excellent properties of the vinyl type polymer emulsion obtained by using the aforesaid neutralized, water-soluble product of maleinized DCPD polymer as an emulsifier, the inventors have achieved the present invention.

The inventors have found that a composition comprising a vinyl type polymer emulsion obtained by using a neutralized, water-soluble product of maleinized DCPD polymer and an oxidation-curable type water-soluble resin does not possess the above-described defects and yet possesses the merits of the emulsion (good drying properties, good water resistance, and good solvent resistance) and the merits of the water-soluble resin (good luster and good corrosion resistance), and so they achieved the present invention based on the above-described findings.

The gist of the present invention resides in the composition comprising:

(a) a vinyl type polymer obtained by polymerizing a vinyl monomer or monomers in the presence of a neutralized, water-soluble product of an adduct between a substantially amorphous polymer obtained by ring-opening polymerization of dicylcopentadiene represented by the following chemical structural formula:

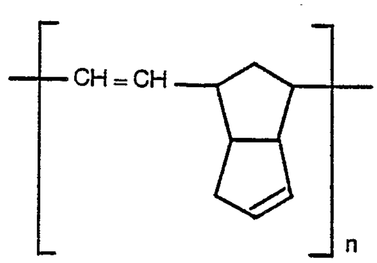

(I)

and maleic acid or maleic anhydride; and

(b) an oxidation-curable type water-soluble resin, consisting of neutralized products of maleinized drying oils, maleinized semi-drying oils, maleinized processed oils and maleinized synthetic oils, neutralized products of maleinized polybutadiene, water-soluble alkyd resins, water-soluble epoxyester resins or fatty acid-modified water-soluble acrylic resins, with the proportion of (a) to (b) being within the range of from 5:95 to 95:5 in terms of solids content ratio.

Ingredient (a) to be used in the present invention can be synthesized preferably according to the process described in Japanese (laid open) Patent Publication No. 38302/81. The number-average molecular weight of maleinized DCPD resin, which can be measured by, for example, an osmotic pressure method, is preferably 500 to 50,000, more preferably 1,000 to 10,000. As the DCPD polymer

to be used in the present invention, any amorphous DCPD polymer obtained by ring-opening polymerization and represented by the foregoing general formula (I) can be used irrespective of the process for its preparation. Specific illustrative processes are described in Japanese Patent Application (OPI) Nos. 92000/78 and 111399/78.

The maleinizing reaction can be conducted in a usual manner by, for example, adding maleic acid and/or maleic anhydride, a solvent, and, if necessary, additives to the resin, well replacing the atmosphere with nitrogen, and heating the mixture at 150 to 250°C under stirring, followed by neutralization to render the product water-soluble. Examples of possible bases to be used for the neutralization are ammonia, amines, and hydroxides, oxides, carbonates and bicarbonates of alkali metals. As the amines, there can be used usually employed primary, secondary or tertiary amines and polyamines such as diamines, triamines and tetramines. The maleinizing degree is desirably adjusted so that the acid value of the maleinized DCPD polymer becomes preferably 30 to 500, more preferably 50 to 300. In addition, maleinized DCPD polymers partly modified with a compound having a functional group capable of reacting with the acid anhydride group such as a compound having an amino group, a hydroxy group, an epoxy group or the like can also be used.

A wide variety of vinyl monomers can be used as the vinyl monomer in the present invention, though it is not desirable to use those with too strong a hydrophilicity in a large amount, as generally also applies to emulsion polymerization. Illustrative examples of the vinyl monomer are aromatic vinyl compounds, acrylic esters, methacrylic esters, glycidyl acrylate, glycidyl acrylate derivatives, glycidyl methacrylate, glycidyl methacrylate derivatives, conjugated diene compounds, etc. The aromatic vinyl compounds include styrene, vinyltoluene, $\alpha$-methylstyrene, divinylbenzene etc. The acrylic and methacrylic acid esters are selected from acrylic or methacrylic esters represented by the general formula of $CH_2{=}C(R_1)COOR_2$ (wherein $R_1$ represents a hydrogen atom or a methyl group, and $R_2$ represents an alkyl group containing 1 to 30 carbon atoms) and esters of acylic or methacrylic acid with ethylene glycol monoalkyl ether, propylene glycol monoalkyl ether or diethylene glycol monoalkyl ether (alkyl moiety containing 1 to 8 carbon atoms), such as allyl acrylate, allyl methacrylate, hydroxypropyl acrylate, hydroxyethyl methacrylate, diethylaminoethyl methacrylate, allyloxyethyl acrylate, allyloxyethyl methacrylate, etc. The conjugated diene compounds include butadiene, pentadiene, isoprene, chloroprene, etc. These polymerizable vinyl monomers may be used alone or in combinations of two or more.

Further, water-soluble or hydrophilic vinyl monomers other than those described above, such as acrylic acid, methacrylic acid, itaconic acid, acrylamide, methacrylamide, N-methylacrylamide, N-methylolated acrylamide, dimethylaminoethyl methacrylate, N-methylolated methacrylamide, hydroxyethyl acrylate, vinylpyridine, vinyl acetate, vinyl chloride, vinylidene chloride, acrylonitrile, vinylpyrrolidone, etc., can be used together with the above-described ones in small amounts.

In the present invention, polymerization of the polymerizable vinyl monomer is performed in water in the presence of the neutralized, water-soluble product of the maleinized DCPD polymer, the vinyl monomer, a radical polymerization initiator and, if necessary, a water-soluble or hydrophilic organic solvent at temperatures between 0 and 100°C. As the radical polymerization initiator, either a water-soluble or oil-soluble one can be effectively used. Examples of such initiators include inorganic initiators such as ammonium persulfate, potassium persulfate, etc. and organic initiators such as benzoyl peroxide, azobisisobutyronitrile, cumene hydroperoxide, etc. Also, water-soluble or oil-soluble redox initiators, actinic light, a combination of photo-sensitizer and actinic light, ionizing radiations, ultrasonic waves, etc. can be effectively employed. Illustrative examples of the water-soluble or hydrophilic organic solvents are alcohol solvents, ether solvents, ester solvents, amide solvents and ketone solvents.

The proportion of the maleinized DCPD polymer to the vinyl monomer to be used in the present invention is not particularly limited as long as it falls within the range which enables a stable emulsion to form. In general, however, the proportion is preferably adjusted so that the acid value of the total solid ingredients of the resulting emulsion before neutralization falls within the range of from 3 to 100.

The oxidation-curable type water-soluble resin (b) to be used in the present invention are neutralized products of maleinized drying oils, maleinized semi-drying oils, maleinized processed oils and maleinized synthetic oils, neutralized products of maleinized polybutadiene, water-soluble alkyd resins, water-soluble epoxyester resins, fatty acid-modified water-soluble acrylic resins, and the like. These oxidation-curable type water-soluble resins preferably possess an acid value of 20 to 100 and a weight-average molecular weight (measured by GPC i.e. through a gel permeation column) of 800 to 20,000. Of these, water-soluble alkyd resins, water-soluble epoxyester resins, and fatty acid-modified water-soluble acrylic resins are more preferred for use in the present invention.

Illustrative examples of the neutralized, water-soluble products of maleinized drying oils, maleinized semi-drying oils, maleinized synthetic oils and maleinized processed oils are products which are obtained by placing a drying oil or a semi-drying oil (e.g., linseed oil, soybean oil, tung oil, safflower oil, castor oil, etc.) or a synthetic or processed oil (e.g., a boiled oil, a stand oil, an esterified oil, a styrenated oil, etc.), maleic acid and/or maleic anhydride and, if necessary, a solvent in a reaction vessel and, after replacing the atmosphere by nitrogen, heating the mixture, and neutralizing the resultant maleinized product to render if water-soluble. Examples of the neutralized, water-soluble products

of maleinized polybutadiene are products which are obtained by neutralizing maleinized products of 1,2-polybutadiene or 1,4-polybutadiene prepared by maleinizing in the same manner as described above. Examples of the water-soluble alkyd resins are resins which are obtained by reacting an alcoholic material, a carboxylic acid material and a drying oil material in a well known manner and which possess an acid value of, usually, not more than 200, preferably 20 to 100 and a weight-average molecular weight of 800 to 20,000. Examples of the alcoholic material include glycerin, trimethylolethane, trimethylolpropane, pentaerythritol, etc. Examples of the carboxylic acid material include phthalic acid, phthalic anhydride, isophthalic acid, terephthalic acid, trimellitic acid, trimellitic acid anhydride, glutamic acid, maleic acid, maleic anhydride, etc.

Examples of the oil-modifying material include drying oils such as linseed oil, safflower oil, tung oil, soybean oil, cotton seed oil, etc. and the fatty acids thereof.

Suitable examples of the water-soluble epoxyester resins are those which are obtained by esterifying polyepoxide with a drying oil fatty acid (e.g., linseed oil fatty acid, safflower oil fatty acid, tall oil fatty acid, etc.) in a well known manner and which possess an acid value of not more than 200, preferably 20 to 100.

Illustrative examples of the fatty acid-modified water-soluble acrylic resins are those which have the structure wherein an acrylic polymer obtained by radical polymerization is bound to unsaturated fatty acid and which possess an acid value of 20 to 100 and a weight-average molecular weight of 800 to 20,000.

More specifically, they are high molecular polymers wherein the main chain is an acrylic polymer obtained by radical polymerization and the side chain is a drying or semi-drying oil fatty acid residue capable of being cured by oxidation.

The process for preparing the inventive high molecular polymer involves previously preparing the fatty acid-modified vinyl monomer containing an unsaturated fatty acid residue and copolymerizing it with an $\alpha$, $\beta$-ethylenically unsaturated acid and an $\alpha$, $\beta$-ethylenically unsaturated monomer to thereby obtain a fatty acid-modified acrylic polymer, and secondly synthesizing an acrylic polymer containing carboxyl groups and having a main chain of carbon-to-carbon bonds and subjecting this polymer to addition reaction with a fatty acid-modified, epoxy group-containing compound which is an adduct of an unsaturated fatty acid with a di-epoxidel to give a fatty acid-modified acrylic polymer.

The solids content ratio, (a)/(b), in the composition of the present invention suitably selected from the range of 5/95 to 95/5 by weight.

The composition of the present invention makes possible improved filming properties, luster and adhesiveness, which are usually poor with water-dispersible resins, using a comparatively small amount of water-soluble resin. In addition, it makes possible to remarkably improve pigment-dispersing properties. For example, a solid content ratio (a)/(b) of not more than 95/5 is effective for improving luster, and (a)/(b) or not more than 80/20 is preferable for improving corrosion resistance. Furthermore, where the content of water-soluble resin is high, remarkably improved drying properties and solvent resistance are obtained as compared with water-soluble resin itself, though inferior to the drying properties and solvent resistance of the emulsion itself.

In order to mix the two components, the vinyl type polymer emulsion may be gradually added to the water-soluble resin under stirring, or may be added thereto after diluting a processed solution of the water-soluble resin with water. In the case of manufacturing a paint containing additives such as a pigment, the vinyl polymer emulsion may be added to a mixture previously obtained by dispersing a pigment in the water-soluble resin.

The composition according to the present invention can provide an emulsion paint with excellent coating film properties as described hereinbefore based on the formulation of the present invention even when additives such as driers (e.g., cobalt naphthenate, manganese naphthenate, zirconium naphthenate, etc.), pigments (e.g., titanium white, calcium carbonate, silisic acid anhydride etc, etc.), wetting agents, plasticizers, defoaming agents, rust inhibitors, thickening agents, and water are added thereto.

When used as a paint, the composition of the present invention inhibits rust formation upon application to metals and provides a coating film having excellent film properties (excellent solvent resistance, luster, and adhesiveness). It can also be applied to metals such as steel, zinc-plated steel and aluminum, thus being widely used as a paint for vehicles, cars, agricultural machinery, outdoor structures (e.g., towers, bridges, etc.), and articles for household use.

The composition of the present invention can find wide application in adhesives, binders for aqueous ink, coating materials, etc. other than paints utilizing water resistance, adhesiveness, excellent mechanical strength, etc.

The present invention will now be described in more detail by reference to typical examples which, however, are not to be construed as limitative but allow various alterations and improvements within the scope of the present invention. Preparation of maleinized DCPD polymer:

Reference Example 1

Amorphous dicyclopentadiene polymers obtained by ring-opening polymerization were all prepared according to the process disclosed in Japanese Patent Application (OPI) No. 92000/78.

500 g of a starting DCPD resin (intrinsic viscosity at 30°C in xylene: 0.13) was dissolved in 500 g

of tetralin, and 200 g of maleinized anhydride, 2.5 g of BHT, and 8 g of dimethylformamide were added thereto. After well replacing the atmosphere by nitrogen, the resultant mixture was heated to 190°C to induce the addition reaction with maleic anhydride for 3 hours under stirring. The reaction solution was diluted with xylene, and poured into a large amount of methanol to precipitate a polymer. The thus obtained polymer was dried in vacuo at 60°C. Elemental analysis of the resultant polymer revealed that this resin had a theoretical acid value of 220.

Reference Example 2

500 g of maleinized DCPD resin obtained in Reference Example 1 was dispersed in 1700 g of deionized water. Then, 100 g of butyl cellosolve, 90 g of triethylamine, and 25 g of 25% aqueous ammonia were added thereto, and the resultant mixture was heated to 90°C under stirring to obtain a homogeneous, transparent neutralized aqueous solution.

Then, 1450 g (300 g of maleinized DCPD polymer, 1020 g of water, 60 g of butyl cellosolve®, 54 g of triethylamine, and 15 g of ammonia) of the above-described neutralized aqueous solution were placed in a 3-liter, four-necked flask equipped with a stirrer, a thermometer, a cooling tube, and a nitrogen-introducing tube. Subsequently, 348 g of butyl methacrylate containing dissolved therein 5 g of cobalt naphthenate (containing 8% cobalt metal) and 20 g of lead naphthenate (containing 30% lead metal) as metal driers, 141 g of butyl acrylate, and 211 g of methyl methacrylate were added thereto, followed by replacement several times of the atmosphere by nitrogen gas.

Then, 2.28 g of ammonium persulfates dissolved in 450g of deionized water was added thereto, and the temperature of the system was raised to 50°C under vigorous stirring. After polymerizing for 2 hours, the temperature of the system was further raised to 85°C to induce polymerization for 2 hours.

The resultant emulsion was a somewhat transparent homogeneous solution. This emulsion contained 39 wt % solid ingredients, and polymerization conversion calculated based on the solids content was 99.9%, thus polymerization had been completed.

Measurement of the emulsion under an electron microscope revealed that the emulsion particle size was on average as fine as 0.04 $\mu$. The pH of the emulsion was 8.9.

Reference Example 3

118 g of stearic acid, 60 g of glycidyl methacrylate, and 0.2 g of hydroquinone were placed in a four-necked flask and reacted at 150°C for 8 hours under stirring to obtain an addition reaction product.

40 g of this reaction product was dissolved in 100 g of butyl cellusolve® and, after raising the temperature to 120°C, a mixture of 50 g of n-butyl methacrylate and 13 g of acrylic acid and 7 g of azobisisobutyronitrile were added thereto and polymerized for 8 hours. After completion of the reaction, butyl cellosolve® was evaporated using an evaporator to obtain a polymer having an acid value of 90 and a solids content of 80% in a polymerization conversion of 99.1%.

12 g of 25% aqueous ammonia was added to this reaction product to render it water-soluble, and diluted with deionized water to obtain fatty acid-modified acrylic resin aqueous solution having a solids content of 50%.

Examples 1 and 2

A water-soluble alkyd resin was gradually added, under stirring, to the emulsion solution obtained in Reference Example 2 in proportions given in Table 2 to obtain homogeneous aqueous compositions. Then, these compositions were respectively compounded with a titanium oxide series white pigment and a defoaming agent according to the formulation shown in Table 1 to obtain white paints. Various properties thereof are shown in Table 2.

TABLE 1

| | |
|---|---|
| a) Paste formulation: | |
| Aqueous composition | 50 parts |
| Titanium oxide series white pigment *1 | 80 parts |
| Water | 20 parts |
| Defoaming agent *2 | 1 part |
| (These were dispersed in a ball mill.) | |
| Paste | 151 parts |
| b) Paint formulation: | |
| Paste described above | 151 parts |
| Aqueous composition | 110 to 155 parts |
| Water | varying amounts |

*1 Trade name: Tipaque® R930; made by Ishihara Sangyo Kaisha, Ltd.

*2 Trade name: Additol® XW–393, made by Hoechst.

TABLE 2

| | | Example 1 | Example 2 | Reference Example 1 | Reference Example 2 |
|---|---|---|---|---|---|
| Aqueous Composition | (a) Emulsion of Reference Example 2 | 164 parts | 62 parts | 205 parts | 0 |
| | (b) Water-soluble soluble Alkyd Resin *3 | 32 parts | 112 parts | 0 | 160 parts |
| | Solids Content Ratio of (a)/(b) | 80:20 | 30:70 | 100:0 | 0:100 |
| Pigment-dispersing Properties as Paint *4 | | good | good | fair | good |
| Coating Film Properties *5 | Dry-to-the-Touch (min) | 15 | 20 | <10 | 35 |
| | Primary Rust-Forming Properties | no | no | yes | no |
| | 60° Mirror Reflection | 85 | 90 | 80 | 96 |
| | Erichsen Value (m/m) | >7 | >7 | 5 | >7 |
| | Water Resistance | good | good | good | bad |
| | Resistance against Salt Water Spraying | good | good | bad | good |

*3: Trade name: Arolon® 376; made by Nishoku Arrow Chemical Co. Ltd.

*4: As the pigment, titanium oxide series white pigment was compounded in a proportion of 1 : 1 based on the solids contents of (a) and (b). Hereinafter the same applies.

*5: Sample paints were coated on polished mild steel plates and, after drying for 7 days at ordinary temperature, tested according to JIS—K 5400.

As is clear from the above examples, the composition of the present invention remarkably remedies the defects of the emulsion and the water-soluble resin while maintaining their merits.

Examples 3, 4 and 5

The water-soluble acrylic resin of Reference Example 3 was gradually added, under stirring, to the emulsion solution of Reference Example 2 in the proportions given in Table 3 to obtain homogeneous aqueous compositions.

Various properties of paints obtained by compounding these compositions according to the formulation shown in Table 1 are shown in Table 3.

TABLE 3

| | | Example 3 | Example 4 | Example 5 | Comparative Ex. 3 |
|---|---|---|---|---|---|
| Aqueous Composition | (a) Emulsion of Reference Example 2 | 185 parts | 164 parts | 62 parts | 0 |
| | (b) Water-soluble soluble Acryl | 16 parts | 32 parts | 112 parts | 160 parts |
| | Solids Content Ratio of (a)/(b) | 90/10 | 80/20 | 30/70 | 0/100 |
| Pigment-dispersing Properties as Paint | | good | good | good | good |
| Coating Film Properties | Dry-to-the-Touch Time (min) | 10 | 15 | 25 | 40 |
| | Primary Rust-forming Properties | no | no | no | no |
| | 60° Mirror Reflection | 85 | 87 | 92 | 95 |
| | Erichsen Value (m/m) | 7 | 7 | 7 | 7 |
| | Water Resistance | good | good | good | bad |
| | Resistance against Salt Water spraying | fairly good | good | good | good |

Examples 6, 7 and 8

Water-soluble epoxyester resin was gradually added, under stirring, to the emulsion solution of Reference Example 2 in the proportions given in Table 4 to obtain homogeneous aqueous compositions.

Various properties of paints obtained by compounding these compositions according to the formulation shown in Table 1 are shown in Table 4.

TABLE 4

| | | Example 6 | Example 7 | Example 8 | Reference Ex. 4 |
|---|---|---|---|---|---|
| Aqueous Composition | (a) Emulsion of Reference Example 2 | 164 parts | 103 parts | 62 parts | 0 |
| | (b) Water-soluble Epoxy-ester Resin *6 | 32 parts | 80 parts | 112 parts | 160 parts |
| | Solids Content Ratio of (a)/(b) | 80/20 | 50/50 | 30/70 | 0/100 |
| Pigment-dispersing Properties as Paint | | good | good | good | good |
| Coating Film Properties | Dry-to-the-Touch Time (min) | 10 | 25 | 25 | 40 |
| | Primary Rust-forming Properties | no | no | no | no |
| | 60° Mirror Reflection | 85 | 87 | 87 | 90 |
| | Erichsen Value (mm) | 7 | 7 | 7 | 7 |
| | Water Resistance | good | good | good | bad |
| | Resistance against Salt Water Spraying | good | good | good | good |

*6: Trade name: Arolon® 5: made by Nishoku Arrow Chemicals Co., Ltd.

**Claims**

1. A composition comprising:

(a) a vinyl polymer obtained by polymerizing a vinyl monomer or monomers in the presence of a neutralized, water-soluble product of an adduct of a substantially amorphous polymer obtained by ring-opening polymerization of dicyclopentadiene represented by the following chemical structural formula;

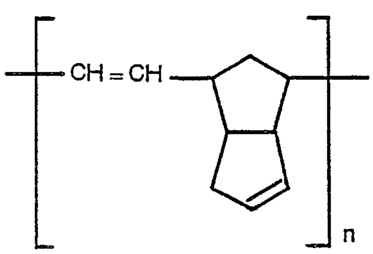

with maleic acid or maleic anhydride; and

(b) an oxidation-curable type water-soluble resin consisting of neutralized products of maleinized drying oils, maleinized semi-drying oils, maleinized processed oils and maleinized synthetic oils, neutralized products of maleinized polybutadiene, water-soluble alkyd resins, water-soluble epoxyester resins, or fatty acid-modified water-soluble acrylic resins, with the proportion of (a) to (b) being within the range from 5:95 to 95:5 in terms of solids content ratio.

2. The composition described in claim 1, wherein said oxidation-curable type water-soluble resin

(b) is a water-soluble resin selected from water-soluble alkyd resins, water-soluble epoxyester resins, and fatty acid-modified water-soluble acylic resins.

3. The composition described in claim 1 or 2, wherein said oxidation-curable type water-soluble resin is a water-soluble resin having an acid value of 20 to 100 and a weight-average molecular weight of 800 to 20,000.

4. The composition described in claim 1, 2 or 3, wherein said vinyl monomer is one, two or more monomers selected from the group consisting of aromatic vinyl monomers, acrylic esters, and methacrylic esters.

5. Use of the compositions described in Claims 1, 2, 3 or 4 in coating materials, especially in paints.

**Revendications**

1. Une composition comprenant:

(a) un polymère vinylique obtenu en polymérisant un ou des monomère(s) vinylique(s) en présence d'un produit soluble dans l'eau, neutralisé, d'un produit d'addition constitué d'un polymère sensiblement amorphe obtenu par polymérisation ouvrant le cycle du dicyclopentadiène représenté par la formule structurale chimique suivante:

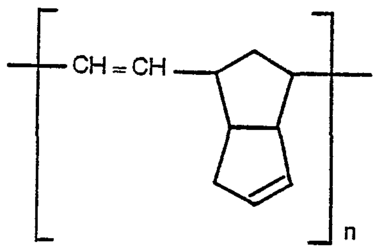

avec l'acide maléique ou l'anhydride maléique, et

(b) une résine soluble dans l'eau durcissable par oxydation formée de produits neutralisés d'huiles siccatives maléinisées, d'huiles semi-siccatives maléinisées, d'huiles transformées maléinisées et d'huiles synthétiques maléinisées, de produits neutralisés du polybutadiène maléinisé, de résines alkydes solubles dans l'eau, de résines époxyesters solubles dans l'eau, ou de résines acryliques solubles dans l'eau modifiées par des acides gras, la proportion de (a) à (b) étant dans la gamme de 5:95 à 95:5 exprimée en rapport de teneur en matières solides.

2. La composition décrite dans la revendication 1, dans laquelle ladite résine (b) soluble dans l'eau durcissable par oxydation est une résine soluble dans l'eau choisie parmi des résines alkydes solubles dans l'eau, des résines époxyesters solubles dans l'eau, et des résines acryliques solubles dans l'eau modifiées par des acides gras.

3. La composition décrite dans la revendication 1 ou 2, dans laquelle ladite résine soluble dans l'eau durcissable par oxydation est une résine soluble dans l'eau ayant un indice d'acide de 20 à 100 et un poids moléculaire moyen de 800 à 20,000.

4. La composition décrite dans les revendications 1, 2 ou 3, dans laquelle ledit monomère vinylique est un, deux, ou plus de deux monomère(s) choisi(s) dans le groupe comprenant des monomères vinyliques aromatiques, des esters acryliques et des esters méthacryliques.

5. Utilisation des compositions décrites dans les revendications 1, 2, 3 ou 4 dans des matériaux de revêtement, spécialement dans les peintures.

**Patentansprüche**

1. Eine Zusammensetzung, enthaltend:

(a) ein Vinylpolymerisat, erhalten durch Polymerisation eines oder mehrerer Vinylmonomeren in Gegenwart eines neutralisierten, wasserlöslichen Produkts aus einem Addukt eines im wesentlichen amorphen Polymerisats, hergestellt durch Polymerisation unter Ringöffnung von Dicyclopentadien der nachstehenden chemischen Formel:

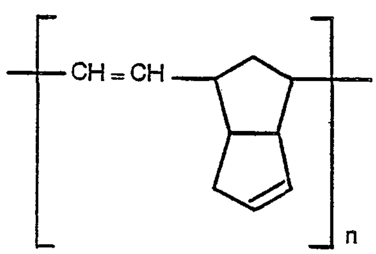

mit Maleinsäure oder mit Maleinsäureanhydrid; und

(b) ein wasserlösliches Harz vom oxydationshärtbaren Typ, bestehend aus neutralisierten Produkten von maleinsäurebehandelten trocknenden Ölen, maleinsäurebehandelten halbtrocknenden Ölen, maleisäurebehandelten verarbeiteten Ölen und maleinsäurebehandelten synthetischen Ölen, neutralisierten Produkten von maleinsäurebehandeltem Polybutadien, wasserlöslichen Alkydharzen, wasserlöslichen Epoxyesterharzen oder fettsäuremodifizierten wasserlöslichen Acrylharzen, wobei das Verhältnis von (a) zu (b) innerhalb eines Bereichs von 5:95 bis 95:5 liegt, ausgedrückt als das Verhältnis der Feststoffgehalte.

2. Zusammensetzung nach Anspruch 1, dadurch gekennzeichnet, daß das wasserlösliche Harz vom oxydationshärtbaren Typ (b) ein wasserlösliches Harz aus der Gruppe wasserlösliche Alkydharze, wasserlösliche Epoxyesterharze und fettsäuremodifizierte wasserlösliche Acrylharze ist.

3. Zusammensetzung nach den Ansprüchen 1 oder 2, dadurch gekennzeichnet, daß das wasserlösliche Harz vom oxydationshärtenden Typ ein wasserlösliches Harz mit einer Säurezahl von 20 bis 100 und einem Gewichtsmittel des Molekulargewichts von 800 bis 20000 ist.

4. Zusammensetzung nach den Ansprüchen 1, 2 oder 3, dadurch gekennzeichnet, daß das erwähnte Vinylmonomer eines, zwei oder drei Monomere darstellt, aus der Gruppe aromatische Vinylmonomere, Acrylsäureester und Methacrylsäureester.

5. Verwendung der Zusammensetzungen nach den Ansprüchen 1, 2, 3 oder 4 in Beschichtungsmaterialien, insbesondere in Anstrichen.